# EUROPÄISCHE PATENTSCHRIFT

(11) **EP 1 363 512 B1**
(45) Veröffentlichungstag und Bekanntmachung des Hinweises auf die Patenterteilung: **19.04.2006**
(21) Anmeldenummer: 02710675.6
(22) Anmeldetag: 18.02.2002
(51) Int. Cl.: A23L 2/52, A23L 1/30, A23L 1/305

(54) **GETRÄNK**
BEVERAGE
BOISSON

(30) Priorität: 22.02.2001 AT 2812001
(43) Veröffentlichungstag der Anmeldung: 26.11.2003
(73) Patentinhaber: Frigo, Peter, 1090 Wien (AT); Ertl, Adolf, 1220 Wien (AT)
(72) Erfinder: Frigo, Peter, 1090 Wien (AT); Ertl, Adolf, 1220 Wien (AT)
(74) Vertreter: Gibler, Ferdinand
(86) Internationale Anmeldenummer: PCT/AT2002/000053
(87) Internationale Veröffentlichungsnummer: WO 2002/065861

(56) Entgegenhaltungen:
- WO-A-01/03520
- GB-A- 2 285 578
- US-A- 5 248 515
- DATABASE WPI Section Ch, Week 200169 Derwent Publications Ltd., London, GB; Class B04, AN 2001-603044 XP002202676 & CN 1 167 588 A (CHEN G), 17. Dezember 1997 (1997-12-17)
- AVIRAM M ET AL: "Pomegranat juice consumption inhibits serum angiotensin converting enzyme activity and reduces systolic blood pressure" ATHEROSCELOSIS, Bd. 158, Nr. 1, 2001, Seiten 195-198, XP002202674
- DATABASE WPI Section Ch, Week 200231 Derwent Publications Ltd., London, GB; Class B04, AN 2002-265119 XP002202675 & KR 2001 100 562 A (CHOI J), 14. November 2001 (2001-11-14)

## Beschreibung

Die Erfindung bezieht sich auf ein Getränk mit einer im wesentlichen aus Wasser gebildeten Getränkeflüssigkeit sowie auf einen Sirup mit einer Sirupflüssigkeit zur Herstellung eines Getränkes durch Vermischung dieses Sirups mit einer im wesentlichen aus Wasser gebildeten Getränkefltissigkeit

Derartigen, in großer Vielfalt bekannten Getränken bzw. Sirups werden verschiedene Inhaltsstoffe beigemischt, womit diese Getränke die unterschiedlichsten Wirkungen auf den menschlichen oder tierischen Körper, welchem diese Getränke verabreicht werden, haben. Stellvertretend für die vielen Vertreter seien beispielsweise koffeinhältige Getränke genannt, die eine aufputschende Wirkung haben.

Aufgabe der vorliegenden Erfindung ist es, einerseits ein Getränk der eingangs angeführten Art und andererseits einen Sirup der eingangs angeführten Art anzugeben, welches Getränk bzw. welcher Sirup, wenn er in einer Getränkeflüssigkeit aufgelöst ist, eine die menschlichen Zellen besonders intensiv aktivierende Wirkung hat

Erfindungsgemäß wird dies dadurch erreicht, daß der Getränkeflüssigkeit Granatapfelextrakt im Bereich zwischen 50 und 5000 mg/l, vorzugsweise im Bereich zwischen 100 und 2000 mg/l, insbesondere im Bereich zwischen 500 und 1000 mg/l, und Yamswurzelextrakt im Bereich zwischen 50 und 5000 mg/l, vorzugsweise im Bereich zwischen 100 und 2000 mg/l, insbesondere im Bereich zwischen 500 und 1000 mg/l, beigemischt ist.

Bei einem erfindungsgemäßen Sirup ist zur Lösung der genannten Aufgabe der Sirupflüssigkeit Granatapfelextrakt im Bereich zwischen 0,35 und 35 g/l, vorzugsweise im Bereich zwischen 0,7 und 14 g/l, insbesondere im Bereich zwischen 3,5 und 7 g/l und Yamswurzelextrakt im Bereich zwischen 0,35 und 35 g/l, vorzugsweise im Bereich zwischen 0,7 und 14 g/l, insbesondere im Bereich zwischen 3,5 und 7 g/l beigemischt

Der vor allem in den Mittelmeerländem angebaute Granatapfel ist seit langer Zeit als Schönheitsspender bekannt Er enthält viel Vitamin C, Panthotensäure, Niacin, Vitamin B2, Kalium und Phosphor. Aus der Forschung ist bekannt, daß die Extrakte der Yamswvurzel verjüngend wirken. Weiters unterstützt die Yamswurzel den Fettabbau auf natürliche Weise.

Granatapfel und Yamswurzel wurden bislang immer nur getrennt angewandt Überraschenderweise hat sich gezeigt, daß eine -im bisher bekannten Stand der Technik völlig unbekannte- gemeinsame Verwendung von Granatapfel und yamswurzel in den angeführten Konzentrationen eine besonders starke, synergistische und über die lineare Summe der Wirkungen von Granatapfel und Yamswurzel hinausgehende, zellaktivierende Wirkung im menschlichen Körper hervorruft.daß die Alterung der Zellen

Diese zellaktivierende Wirkung äußerst sich vor allem darin, daß die Alterung der Zellen verlangsamt wird, was zu einer reduzierten Faltenbildung, zu einer Straffung der Haut usw., führt Nach außen hin führen diese Wirkungen insgesamt zu einem verjüngerten sowie verschönerten äußeren Aussehen eines das erfindungsgemäße Getränk konsumierenden Menschen.

Gemäß einer bevorzugten Ausführungsform der Erfindung kann vorgesehen sein, daß der Getränkeflüssigkeit Guaranaextrakt im Bereich zwischen 100 und 5000 mg/l, vorzugsweise im Bereich zwischen 100 und 2000 mg/l, insbesondere im Bereich zwischen 500 und 1000 mg/l, beigemischt ist.

Bei einem erfindungsgemäßen Sirup kann der Sirupflüssigkeit Guaranaextrakt im Bereich zwischen 0,35 und 35 g/l, vorzugsweise im Bereich zwischen 0,7 und 14 g/l, insbesondere im Bereich zwischen 3,5 und 7 g/l beigemischt sein.

Die südamerikanische Urwaldpflanze Guarana regt den Stoffwechsel an und fördert Verdauung sowie Fettabbau. Durch Hinzumischen von Guaranaextrakt in den angegebenen Konzentrationen zum erfindungsgemäßen Getränk kann dessen positive zellaktivierende Wirkung einerseits gesteigert und andererseits dem Getränk zusätzlich Stoffwechsel-, Verdauungs- und Fettabbau-fördernde Wirkung verliehen werden.

Gemäß einer besonders bevorzugten Ausführungsform der Erfindung kann vorgesehen sein, daß der Getränkeflüssigkeit Carnitin im Bereich zwischen 50 und 300 mg/l, vorzugsweise im Bereich zwischen 50 und 200mg/l, insbesondere im Bereich zwischen 50 und 150 mg/l beigemischt ist

Bei einem erfindungsgemäßen Sirup kann der Sirupflüssigkeit Carnitin im Bereich zwischen 0,35 und 2,1 g/l, vorzugsweise im Bereich zwischen 0,35 und 1,4 g/l, insbesondere im Bereich zwischen 0,35 und 1,05 g/l, beigemischt sein.

Diese Substanz (essentielle Aminosäure) wird seit einigen Jahren im Wellnessbereich erfolgreich eingesetzt. Sie hilft beim Abtransport des Fettes aus der Zelle und steigert die Ausdauer. Speziell durch eine Kombination von Guarana und Carnitin kann der Fettabbau besonders stark angeregt werden, da hierbei die von Guarana bewirkte Förderung des Fettabbaus überproportional von Carnitin verstärkt wird.

In weiterer Ausgestaltung der Erfindung kann vorgesehen sein, daß der Getränkeflüssigkeit Chrompicculinat und/oder Chromgluconat im Bereich zwischen 20 und 120mcg/l, vorzugsweise im Bereich zwischen 20 und 100 mcg/l beigemischt ist.

Diese Substanz erhöht vor allem die Wirkung von Carnitin und Guarana überproportional, sodaß die mit einem erfindungsgemäßen Getränk insgesamt erreichbaren positiven Auswirkungen auf die menschlichen Zellen deutlich verbessert werden.

Die Erfindung wird nachstehend näher beschrieben.

Die Getränke-Flüssigkeit des erfindungsgemäßen Getränkes ist in aller Regel durch Wasser gebildet Dieses kann einen Fruchsaft, wie zB. Ananas-, Zitronen-, Himbeersaft od. dgl., enthalten.

Der Getränkeflüssigkeit ist erfindungsgemäß einerseits Granatapfelextrakt und andererseits Yamswurzelextrakt beigemischt, wobei diese beiden Extrakte jeweils mit einem Anteil im Bereich zwischen 50 und 5000 mg/l (Milligramm Extrakt pro Liter Getränkeflüssigkeit) vorliegen.

Granatapfel ist seit langem für seine zellaktivierende, eine Verschönerung des menschlichen Körpers hervorrufende Wirkung bekannt. Diese Wirkung wurde u.a auch in wissenschaftlichen Publikationen, wie z.B. in: Moneam NM, el Sharaky AS, Badreldin MM. "Oestrogen content of pomegranate seeds", J. Chromatograph 1988 22, 438-43 beschrieben.

Yamswurzel wirkt ebenfalls aktivierend auf menschliche Zellen, wobei auch diese Wirkung durch wissenschaftliche Studien belegt wurde, vgl. beispielsweise:
Mirkin G. "Estrogen in yarns", JAMA 1991, 265: 912 oder
Dentali S. "Clearing up confusion over yarns an progesterone", Altern Ther Health Med 1996, 2:19-20.

Granatapfel- und Yamswurzelextrakt aktivieren bei erfindungsgemäßer gemeinsamer Verwendung in den angegebenen Konzentrationen menschliche Zellen ganz besonders intensiv. Diese zellaktivierende Wirkung zeigt sich vor allem dann, wenn Granatapfel- bzw. Yamswurzelextrakt in Konzentrations-Bereichen zwischen 100 und 2000 mg/l und insbesondere im Bereich zwischen 500 und 1000 mg/l vorliegen. Diese Zellaktivierung bewirkt eine Verlangsamung der Zellalterung, was nach außen eine Verjüngung und Verschönerung bewirkt. Unerwartet und überraschend war in diesem Zusammenhang, daß Grantapfelextrakt und Yamswurzelextrakt einander bei Entfaltung ihrer zellaktivierenden Wirkungen in besonders hohem Maß unterstützen und fördern, womit die insgesamt erreichte Zellaktivierung deutlich intensiver ist, als die lineare Summe der zellaktivierenden Wirkung des Granatapfelextrakts und der Wirkung des Yamswurzelextrakts.

Welche anderen Inhaltsstoffe das Getränk abgesehen von Granatapfel- und Yamswurzelextrakt enthält, ist nicht von Bedeutung. In diesem Sinn ist es beispielsweise möglich, dem Getränk Koffein, Zucker, Geschmacksstoffe, Mineralien, Vitamine, Lebensmittelfarben od. dgl. zuzusetzen.

Als weiteren Inhaltsstoff kann ein erfindungsgemäßes Getränk Guaranaextrakt im Bereich zwischen 100 und 5000 mg/l beinhalten.

Wie in zahlreichen wissenschaftlichen Arbeiten dargestellt, (vgL z.B. Rommelspacher H. "Guarana", Dt. Med Wochenschr 1995, 120:384; Galduroz JC, Carlini EA. "The effects of long-term administration of guarana on the cognition of normal elderly volunteers", Rev. Paul Med 1996, 114: 1073-78; Benoni H., Dallakian P., Taraz K. "Studies on the essential oil from gurana", Z Lebensm Unters Forsch 1996, 203: 95-8) fördert Guarana den Stoffwechsel, die Verdauung und den Fettabbau.

Bei Verwendung von Guarana in den angegebenen Konzentrationen und in Kombination mit Granatapfel- und Yamswurzelextrakt kommen diese Effekte besonders gut zum Tragen. Die positiven Wirkungen dieser Extrakte auf den menschlichen Körper werden von Guarana unterstützt.

Bevorzugt wird Guaranaextrakt mit einer Konzentration zwischen 100 und 2000 mg/l, insbesondere im Bereich zwischen 500 und 1000 mg/l, eingesetzt.

Eine weitere, dem erfindungsgemäßen Getränk beimischbare Substanz ist Carnitin, welches ebenfalls den Fettabbau bzw. den Abtransport von Fett aus menschlichen Körperzellen fördert. Eingesetzt in Konzentrationen im Bereich zwischen 50 und 300 mg/l tritt diese Wirkung in einem optimalen Ausmaß auf.

Wird Carnitin in den angegebenen Anteilen gemeinsam mit Guaranaextrakt verwendet, wird die Fettabbau-fördernde Wirkung von Guarana in einem überraschend starken Ausmaß unterstützt, sodaß das erfindungsgemäße Getränk insgesamt den Fettabban besonders gut anregt. Damit Fett wirklich aus den menschlichen Zellen abtransportiert werden kann, reicht der Konsum des erfindungsgemäßen Getränkes allein nicht aus, es muß dazu vielmehr auch körperliche Bewegung gemacht werden.

Als besonders günstig haben sich Carnitin-Gehalte im Bereich zwischen 50 und 200mg/l, insbesondere im Bereich zwischen 50 und 150 mg/l erwiesen.

Besonders bevorzugt ist es, alle vier angegebenen Substanzen Granatapfelextrakt, Yamswurzelextrakt, Guaranaextrakt und Carnitin gemeinsam in den jeweils angeführten Konzentrationen einzusetzen. Das Getränk hat damit einerseits den von Granatapfel und

Yamswurzel bewirkten, zu einer Verlangsamung der Zellaltenmg führenden Effekt der Aktivierung der menschlichen Zellen und gleichzeitig den von Guarana und Carnitin bewirkten Effekt der Fettabbau-Förderung sowie die hauptsächlich von Guarana herrührenden Wirkungen der Verdauungsförderung und der Stoffwechselanregung. Überraschenderweise treten die positiven Wirkungen der einzelnen Substanzen bei Einsatz derselben in den angegebenen Konzentrationsbereichen in unerwartet hohem Ausmaß auf, was damit zu begründen ist, daß die vier Substanzen einander bei der Entfaltung ihrer jeweiligen Wirkungen unterstützen.

Eine abermalige Steigerung der genannten Wirkungen kann durch Zugabe von Chrompicculinat und/oder Chromgluconat zum erfindungsgemäßen Getränk erreicht werden. Chrompicculinat und/oder Chromgluconat wird dabei der Getränkeflüssigkeit mit einer Konzentration im Bereich zwischen 20 und 120mcg/l (Mikrogramm Chrompicculinat und/oder Chromgluconat pro Liter Getränkeffüssigkeit), vorzugsweise im Bereich zwischen 20 und 100 mcg/l, beigemischt.

Das erfindungsgemäßes Getränk wird in der Regel fertig, d.h. als eine Getränkeflüssigkeit, der die genannten Substanzen beigemengt sind, in den Handel gebracht. Eine andere Form der Vermarktung liegt darin, die erfindungsgemäßen Inhaltsstoffe in Gestalt eines wasserlöslichen Pulvers anzubieten. Zum Erhalt eines erfindungsgemäßen Getränkes braucht dieses Pulver lediglich in einer Getränkeflüssigkeit, wie z.B. Wasser, aufgelöst werden.

Ein derartiges Pulver enthält im Sinne der obigen Erläuterungen Granatapfelextrakt und Yamswurzelextrakt jeweils in solchen Anteilen, daß bei Vermischung mit einer Getränkeflüssigkeit ein erfindungsgemäßes Getränk mit den angeführten Konzentrationen von Granatapfel- und Yamswurzelextrakt entsteht.

Das Pulver kann desweiteren Guaranaextrakt, Carnitin sowie Chrompicculinat und/oder Chromgluconat enthalten. Der Anteil dieser Substanzen im Pulver wird so gewählt, daß ein mit diesem Pulver durch Vermischung mit einer Getränkeflüssigkeit hergestelltes Getränk die oben genannten Konzentrationen an Guaranaextrakt, Carnitin sowie Chrompicculinat und/oder Chromgluconat enthält. Das Pulver kann daneben weitere Inhaltsstoffe, wie z.B. Zucker, Zitronensäure, Mineralien, Vitamine od. dgl. enthalten.

Zur Vermarktung des erfindungsgemäßen Getränkes kann weiters vorgesehen sein, daß an eine Abfüllanlage ein Sirup geliefert wird. Die Abfüllanlage stellt auf Basis dieses Sirups das erfindungsgemäße Getränk her, indem sie den Sirup mit einer Getränkeflüssigkeit, also in der Regel mit Wasser, vermischt.

Damit das auf diese Weise entstehende Getränk die erfindungsgemäßen Anteile an Granatapfelextrakt und Yamswurzelextrakt bzw. vorzugsweise auch die an Anteile an Guarana, Carnitin, Chrompicculinat und/oder Chromgluconat aufweisen kann, sind diese Substanzen der Sirupflüssigkeit beigemischt Welche Inhaltsstoffe die Sirupflüssigkeit neben diesen Substanzen enthält, ist nicht erfindungswesentlich. Beispielsweise kann die Sirupflüssigkeit Fruchtsaft-Sirup, wie z.B. Ananassirup, Zitronensäure, Farbstoffe, Aromastoffe, Zucker od. dgl. enthalten.

Bei einem erfindungsgemäßen Sirup sind der Sirupflüssigkeit Granatapfelextrakt im Bereich zwischen 0,35 und 35 g/l (Gramm Granatapfelextrakt pro Liter Sirupflüssigkeit), vorzugsweise im Bereich zwischen 0,7 und 14 g/l, insbesondere im Bereich zwischen 3,5 und 7 g/l und Yarmswurzelextrakt im Bereich zwischen 0,35 und 35 g/l (Gramm Yamswurzelextrakt pro Liter Sirupflüssigkeit), vorzugsweise im Bereich zwischen 0,7 und 14 g/l, insbesondere im Bereich zwischen 3,5 und 7 g/l, beigemischt.

Die Menge an Getränkeflüssigkeit, in welcher ein solcher Sirup aufgelöst wird, ist dabei so zu wählen, daß im entstehenden Getränk die oben angegebenen Anteile an Granatapfel- und Yamswurzelextrakt vorliegen.

Soll mit dem erfindungsgemäßen Sirup ein Getränk hergestellt werden, das auch Guarana enthält, ist der Sirupflüssigkeit Guaranaextrakt im Bereich zwischen 0,35 und 35 g/l, vorzugsweise im Bereich zwischen 0,7 und 14 g/l, insbesondere im Bereich zwischen 3,5 und 7 g/l beigemischt.

Desweiteren kann der Sirupflüssigkeit Carnitin mit einem Anteil im Bereich zwischen 0,35 und 2,1 g/l, vorzugsweise im Bereich zwischen 0,35 und 1,4 g/l, insbesondere im Bereich zwischen 0,35 und 1,05 g/l, beigemischt sein.

In der Sirupflüssigkeit kann desweiteren Chrompicculinat und/oder Chromgluconat enthalten sein.

## Patentansprüche

1. Getränk mit einer im wesentlichen aus Wasser gebildeten Getränkeflüssigkeit, **dadurch gekennzeichnet, daß** der Getränkeflussigkeit Granatapfelextrakt im Bereich zwischen 50 und 5000 mg/l, vorzugsweise im Bereich zwischen 100 und 2000 mg/l, insbesondere im Bereich zwischen 500 und 1000 mg/l und Yamswurzelextrakt im Bereich zwischen 50 und 5000 mg/l, vorzugsweise im Bereich zwischen 100 und 2000 mg/l, insbesondere im Bereich zwischen 500 und 1000 mg/l beigemischt ist.

2. Getränk nach Anspmch 1, **dadurch gekennzeichnet, daß** der Getränkeflüssigkeit Guaranaextrakt im Bereich zwischen 100 und 5000 mg/l, vorzugsweise im Bereich zwischen 100 und 2000 mg/l, insbesondere im Bereich zwischen 500 und 1000 mg/l, beigemischt ist.

3. Getränk nach Anspruch 1 oder 2, **dadurch gekennzeichnet, daß** der Getränkeflüssigkeit Carnitin im Bereich zwischen 50 und 300 mg/l, vorzugsweise im Bereich zwischen 50 und 200mg/l, insbesondere im Bereich zwischen 50 und 150 mg/l, beigemischt ist.

4. Getränk nach Anspruch 1, 2 oder 3, **dadurch gekennzeichnet, daß** der Getränkeflüssigkeit Chrompicculinat und/oder Chromgluconat im Bereich zwischen 20 und 120mcg/l, vorzugsweise im Bereich zwischen 20 und 100 mcg/l, beigemischt ist.

5. Sirup mit einer Sirupflüssigkeit zur Herstellung eines Getränkes durch Vermischung dieses Sirups mit einer im wesentlichen aus Wasser gebildeten Getränkeflüssigkeit, **dadurch gekennzeichnet, daß** der Siropflüssigkeit Granatapfelextrakt im Bereich zwischen 0,35 und 35 g/l, vorzugsweise im Bereich zwischen 0,7 und 14 g/l, insbesondere im Bereich zwischen 3,5 und 7 g/l und Yamswurzelextrakt im Bereich zwischen 0,35 und 35 g/l, vorzugsweise im Bereich zwischen 0,7 und 14 g/l, insbesondere im Bereich zwischen 3,5 und 7 g/l beigemischt ist.

6. Sirup nach Anspruch 5, **dadurch gekennzeichnet, daß** der Sirupflüssigkeit Guaranaextrakt im Bereich zwischen 0,35 und 35 g/l, vorzugsweise im Bereich zwischen 0,7 und 14 g/l, insbesondere im Bereich zwischen 3,5 und 7 g/l beigemischt ist.

7. Sirup nach Anspruch 5 oder 6, **dadurch gekennzeichnet, daß** der Simpflüssigkeit Carnitin im Bereich zwischen 0,35 und 2,1 g/l, vorzugsweise im Bereich zwischen 0,35 und 1,4 g/l, insbesondere im Bereich zwischen 0,35 und 1,05 g/l, beigemischt ist.

## Claims

1. A beverage with a beverage liquid formed substantially by water, **characterized in that** pomegranate extract in the range of between 50 and 5000 mg/L, preferably in the range of between 100 and 2000 mg/L, more preferably in the range of between 500 and 1000 mg/L, and yam extract in the range of between 50 and 5000 mg/L, preferably in the range of between 100 and 2000 mg/L, more preferably in the range of between 500 and 1000 mg/L are admixed into the beverage liquid.

2. A beverage according to claim 1, **characterized in that** guarana extract in the range of between 100 and 5000 mg/L, preferably in the range of between 100 and 2000 mg/L, more preferably in the range of between 500 and 1000 mg/L is admixed into the beverage liquid.

3. A beverage according to claim 1 or 2, **characterized in that** carnitine in the range of between 50 and 300 mg/L, preferably in the range of between 50 and 200 mg/L, more preferably in the range of between 50 and 150 mg/L is admixed into the beverage liquid.

4. A beverage according to claim 1, 2 or 3, **characterized in that** chromium picolinate and/or chromium gluconate is admixed into the beverage liquid in the range of between 20 and 120 mcg/L, preferably in the range of between 20 and 100 mcg/L.

5. A syrup with a syrup liquid for producing a beverage by mixing said syrup with a beverage liquid substantially formed by water, **characterized in that** pomegranate extract in the range of between 0.35 and 35 g/L, preferably in the range of between 0.7 and 14 g/L, more preferably in the range of between 3.5 and 7 g/L, and yam extract in the range of between 0.35 and 35 g/L, preferably in the range of between 0.7 and 14 g/L, more preferably in the range of between 3.5 and 7 g/L are admixed into the syrup liquid.

6. A syrup according to claim 5, **characterized in that** guarana extract in the range of between 0.35 and 35 g/L, preferably in the range of between 0.7 and 14 g/L, more preferably in the range of between 3.5 and 7 g/L is admixed into the syrup liquid.

7. A syrup according to claim 5 or 6, **characterized in that** carnitine in the range of between 0.35 and 2.1 g/L, preferably in the range of between 0.35 and 2.1 g/L, more preferably in the range of between 0.35 and 1.05 g/L is admixed into the syrup liquid.

## Revendications

1. Boisson avec un liquide constitutif de cette boisson essentiellement formé d'eau, **caractérisée en ce que** l'on a mélangé au liquide constitutif de cette boisson entre 50 et 5 000 mg/l, de préférence entre 100 et 2 000 mg/l, notamment entre 500 et 1 000 mg/l d'extrait de grenade et entre 50 et 5 000 mg/l, de préférence entre 100 et 2 000 mg/l, notamment entre 500 et 1 000 mg/l d'extrait d'igname.

2. Boisson selon la revendication 1, **caractérisée en ce que** l'on a mélangé au liquide constitutif de cette boisson entre 100 et 5 000 mg/l, de préférence entre 100 et 2 000 mg/l, notamment entre 500 et 1 000 mg/l d'extrait de guarana.

3. Boisson selon la revendication 1 ou 2, **caractérisée en ce que** l'on a mélangé au liquide constitutif de cette boisson entre 50 et 300 mg/l, de préférence entre 50 et 200 mg/l, notamment entre 50 et 150 mg/l de carnitine.

4. Boisson selon la revendication 1, 2 ou 3, **caractérisée en ce que** l'on a mélangé au liquide constitutif de cette boisson entre 20 et 120 µg/l, de préférence entre 20 et 100 µg/l, de picolinate de chrome et/ou de gluconate de chrome.

5. Sirop avec un liquide constitutif de ce sirop destiné à la réalisation d'une boisson obtenue en mélangeant ce sirop avec un liquide constitutif de cette boisson essentiellement formé d'eau, **caractérisé en ce que** l'on a mélangé au liquide constitutif du sirop entre 0,35 et 35 g/l, de préférence entre 0,7 et 14 g/l, notamment entre 3,5 et 7 g/l d'extrait de grenade et entre 0,35 et 35 g/l, de préférence entre 0,7 et 14 g/l, notamment entre 3,5 et 7 g/l d'extrait d'igname.

6. Sirop selon la revendication 5, **caractérisé en ce que** l'on a mélangé au liquide constitutif de ce sirop entre 0,35 et 35 g/l, de préférence entre 0,7 et 14 g/l, notamment entre 3,5 et 7 g/l d'extrait de guarana.

7. Sirop selon la revendication 5 ou 6, **caractérisé en ce que** l'on a mélangé au liquide constitutif de ce sirop entre 0,35 et 2,1 g/l, de préférence entre 0,35 et 1,4 g/l, notamment entre 0,35 et 1,05 g/l de carnitine.
